# EUROPEAN PATENT APPLICATION

(11) **EP 2 278 447 A1**
(43) Date of publication of application: **26.01.2011**
(21) Application number: 10157665.0
(22) Date of filing: 25.03.2010
(51) Int. Cl.: G06F 3/048

(54) **Mobil terminal for displaying menu information on a trace according to a touch input signal**

(30) Priority: 14.07.2009 KR 20090064240
(71) Applicant: Pantech Co., Ltd., Seoul 121-792 (KR)
(72) Inventor: Oh, Jang Wook, Seoul 121-792 (KR); Kim, Nayoung, Seoul 121-792 (KR); Kim Sung Yun, Seoul 121-792 (KR); Kim, Hyae Ran, Seoul 121-792 (KR); Park, Hyo Hoon, Seoul 121-792 (KR); Song, Youngsoo, Seoul 121-792 (KR); Won, Hyun Jun, Seoul 121-792 (KR); Yoo, Gene, Seoul 121-792 (KR); Jang, Seonghwan, 121-792, Seoul (KR); Jeong, Taewan, Seoul 121-792 (KR)
(74) Representative: Herzog, Markus

(57) **Abstract**

A mobile terminal that displays menu information along a trace may include a memory unit to store menu information; a touch screen including a touch panel, the touch screen to display the menu information; and a controller to control the touch screen to display at least a portion of the menu information on a trace according to a dragged input signal corresponding to the trace. A method for displaying menu information on a display includes storing menu information including a menu item and sub-menu items corresponding to the menu item, receiving a dragged input signal on the display, the dragged input signal beginning at a start point, and displaying the sub-menu items on a trace corresponding to the dragged input signal, the menu item arranged at the start point.

## Description

### CROSS-REFERENCE TO RELATED APPLICATION

This application claims priority from and the benefit of Korean Patent Application No. 10-2009-0064240, filed on July 14, 2009, which is hereby incorporated by reference for all purposes as if fully set forth herein.

### BACKGROUND

FIELD OF THE INVENTION

This disclosure relates to a mobile terminal that displays menu information according to a touch signal, and more specifically, to a mobile terminal that displays menu information according to a touch signal that is dragged on a touch screen.

DISCUSSION OF THE BACKGROUND

As a part of mobile communications technology, mobile terminals have been developed as devices for providing various services such as games, message transmission/reception, Internet search, wireless data communications, electronic organizers, digital cameras, and video phone calls, in addition to general phone calls.

Recently, attempts to adopt a graphic user interface (GUI) similar to that used in a personal computer (PC) or a touch panel to a mobile terminal have been made.

A mobile terminal having a touch function may include a touch panel as a user interface instead of a keypad. In this case, a user command may be input to the touch panel to cause the touch panel to generate a voltage signal or a current signal at a position touched by a touch pen or a finger. Such a touch panel may receive input information more conveniently.

However, the existing touch panel simply replaces the functions of a keypad in a mobile terminal, so that the mobile terminal performs only a function of recognizing keystroke-type commands inputted by the user through a touch pen or a finger. In addition, various applications for improving user's convenience have not been proposed yet.

### SUMMARY

Exemplary embodiments of the present invention provide a mobile terminal that receives a touch signal and displays menu information on a trace of the touch signal.

Additional features of the invention will be set forth in the description which follows, and in part will be apparent from the description, or may be learned by practice of the invention.

An exemplary embodiment of the present invention discloses a mobile terminal including: a memory unit to store menu information; a touch screen including a touch panel, the touch screen to display the menu information; and a controller to control the touch screen to display at least a portion of the menu information on a trace according to a dragged input signal corresponding to the trace.

An exemplary embodiment of the present invention discloses a method for displaying menu information on a display. The method includes storing menu information including a menu item and a plurality of sub-menu items corresponding to the menu item, receiving a dragged input signal on the display, the dragged input signal beginning at a start point, and displaying the sub-menu items on a trace corresponding to the dragged input signal, the menu item arranged at the start point.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a view illustrating a block diagram of a mobile terminal according to an exemplary embodiment.

FIG. 2a and FIG. 2b are views illustrating a display screen of the mobile terminal displaying main menus and sub-menus according to an exemplary embodiment.

FIG. 3a, FIG. 3b, and FIG. 3c are views illustrating a display screen of the mobile terminal displaying sub-menus according to an exemplary embodiment.

FIG. 4a and FIG. 4b are views illustrating a display screen of the mobile terminal displaying sub-menus according to an exemplary embodiment.

FIG. 5a, FIG. 5b, FIG. 5c, and FIG. 5d are views illustrating a display screen of the mobile terminal displaying the menu information in various manners according to an exemplary embodiment.

FIG. 6a and FIG. 6b are views illustrating a display screen of the mobile terminal displaying main menus, sub-menus, and items according to an exemplary embodiment.

FIG. 7a and FIG. 7b are views illustrating a display screen of the mobile terminal for deleting menu information according to an exemplary embodiment.

FIG. 8 is a view illustrating a display screen of the mobile terminal for providing an edit function for a displayed trace according to an exemplary embodiment.

FIG. 9 is a view illustrating a display screen of the mobile terminal for providing an edit function for the displayed menu information according to an exemplary embodiment.

FIG. 10 is a view illustrating a display screen of the mobile terminal including a virtual area according to an exemplary embodiment.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the shape, size, and relative sizes of regions may be exaggerated for clarity. Like reference numerals in the drawings denote like elements.

The terminology used herein is for the purpose of describing particular embodiments only and is not intended to be limiting of this disclosure. As used herein, the singular forms "a", "an" and "the" are intended to include the plural forms as well, unless the context clearly indicates otherwise. Furthermore, the use of the terms a, an, etc. do not denote a limitation of quantity, but rather denote the presence of at least one of the referenced item. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

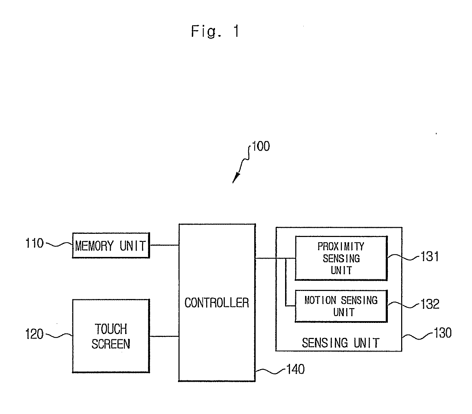

FIG. 1 is a view illustrating a block diagram of a mobile terminal according to an exemplary embodiment.

Referring to FIG. 1, the mobile terminal 100 includes a memory unit 110, a touch screen 120, a sensing unit 130, and a controller 140.

The memory unit 110 stores menu information. The menu information may include information on main menus, sub-menus, and items. The main menu, the sub-menu, and the item are category names for classifying the menu information into categories. Generally, one or more sub-menus may belong to a single main menu, and one or more items may belong to a single sub-menu. The memory unit 110 may include a recording medium such as flash memory, hard disk, multimedia card micro memory, card type memory, random access memory (RAM), static random access memory (SRAM), read-only memory (ROM), electrically erasable read-only memory (EEPROM), programmable read-only memory (PROM), magnetic random access memory (MRAM), magnetic disk, optical disk.

The memory unit 110 may store information on the frequency of use of menu information used by a user. In addition, the memory unit 110 may store the order of priority of the menu information according to user settings set in advance by the user. Furthermore, the memory unit 110 may store a preference folder including the menu information more frequently used by the user according to user settings set in advance of the user. The preference folder is a folder in which menus with higher preference may be collected so that the user may more easily access the corresponding menus. The memory unit 110 may store an image that defines a menu display form according to a drag form of an arbitrary shape. The image may be used to designate the drag form which can be representatively inputted and to arrange the menu information when the designated drag form is inputted. In addition, the memory unit 110 may store a trace displayed according to an input signal dragged across the touch screen 120 and the menu information. Specifically, the memory unit 110 may store an operation performed when the mobile terminal 100 receives a manipulation signal and executes an arbitrary application, and may store the operation state of the mobile terminal 100 at predetermined periods.

The touch screen 120 includes a touch panel and displays the menu information of the memory unit 110 according to an input signal. Specifically, the sensor of the touch screen 120, which senses a touch operation, has a mutual layer structure and thus may function as an output device and an input device. The touch sensor may be in the form of touch film, touch sheet, touch pad, and the like. The touch sensor may receive an external signal by converting a change in pressure exerted onto the surface of the touch screen, electrical capacity generated at a particular site, or the like into an electrical input signal. The touch screen 120 may receive a user's command and display information on the basis of a control signal generated by the controller 140.

In addition, the touch screen 120 may further have an extended virtual area. The extended virtual area is an area larger than the area displayed on the display screen of the mobile terminal 100, and is provided in consideration of the limitation to the size of the screen that can be configured in the mobile terminal. That is, because of the extended size, the extended virtual area may contain more contents than the screen that can be configured in the mobile terminal 100 and the user may view the virtual area which is initially not shown on the display screen by horizontally or vertically scrolling the area displayed on the mobile terminal 100.

The sensing unit 130 may include a proximity sensing unit 131 and a motion sensing unit 132. The proximity sensing unit 131 may detect a nearby object around the touch screen 120 using an electromagnetic force or infrared rays without mechanical contact. Thus, the proximity sensing unit 131 may receive a user's command without contact. The motion sensing unit 132 detects the motion of the mobile terminal and generates a detection signal about the motion. Specifically, the motion sensing unit 132 may generate a detection signal by detecting the motion of the mobile terminal 100 according to a rotation angle, a position, acceleration, or the like.

The controller 140 may control the overall operations of the mobile terminal 100. For example, the controller 140 may perform controlling and processing associated with phone calls, data communications, video phone calls, and the like. The controller 140 may control the display of menu information stored in the memory unit 110 on the touch screen 120 along the trace of the dragged input signal on the touch screen 120 in response to the dragged input signal of the user. The trace of the dragged input signal displayed on the input display unit 120 may be processed to be transparent or be displayed to be recognizable by the user. The controller 140 may receive the input signal through the touch screen 120, the sensing unit 130, or a manipulation unit (not shown in the figure).

In addition, if the dragged input signal passes a reference point set in advance, the controller 140 may display the menu information corresponding to the reference point. The reference points may be set in advance such that the positions are suitably distributed to display all or part of the sub-menus that belong to the selected menu in consideration of the number of pieces of the menu information, and the menu information corresponding to the reference point is displayed if the dragged input signal passes through the distributed position. The menu information may include sub-menus that belong to the main menu corresponding to a point where the dragged input signal of the user begins. Accordingly, the controller 140 may control the sequential display of sub-menus on the trace of the dragged input signal. The controller 140 may display the menu information in the order of the frequency of use, or may display the menu information in the order of priority, which may be set by the user, by using the information of the memory unit 110. In addition, the controller 140 may control the touch screen 120 to display a menu shortcut icon for a more direct access to a selected menu on the display screen in a standby state of the mobile terminal 100. The menu shortcut icon is an icon set to be able to more directly access the menu displayed. Specifically, according to the setting of the user, the main menu icons for the main menus more frequently used by the user are displayed on the display screen in the standby state of the mobile terminal 100 such that the user may more directly access the desired menus through the main menu icons. In addition, under control of the controller 140, only the menu information more frequently used by the user may be displayed on the trace by using the information in the preference folder stored in the memory unit 110.

The controller 140 may execute an animation effect to the menu information so as to be displayed on the trace of the dragged input signal. Examples of the animation effect may include zooming in to the menu information corresponding to a point where the dragged input signal passes from among the plural pieces of the menu information which are sequentially displayed, and zooming out from the pieces of menu information which are previously displayed, displaying in color the menu information corresponding to a point where the dragged input signal passes from among the plural pieces of the menu information which are sequentially displayed, displaying in grey the pieces of the menu information which are previously displayed, displaying in the uppermost layer in a 3D manner of the touch screen the menu information corresponding to a point where the dragged input signal passes from among the plural pieces of the menu information which are sequentially displayed in the 3D manner, and retreating from and displaying in the lower layer in the 3D manner, the pieces of the menu information which are previously displayed, and the like. The plurality of pieces of menu information displayed as described above may include main menus, sub-menus, and pieces of item information. In addition, various types of animation effect may be applied for more easy recognition of the pieces of menu information.

The controller 140 may control the touch screen to display the menu information in various manners in consideration of the limitation to the size of the display screen of the mobile terminal. Specifically, the controller 140 may control the touch screen to sequentially display the pieces of the menu information corresponding to the display reference number according to the dragged input signal on the trace of the dragged input signal while updating. The display reference number is a reference number for displaying only the menu information corresponding to a predetermined reference number on the touch screen 120 and, if the reference number is exceeded, displaying the new menu information while removing the menu information that is previously displayed. As described above, when the pieces of the menu information are sequentially displayed while updating, there may be a case where the user wants to return to the previous menu. Therefore, connection icons that can move to the previous trace or the subsequent trace may be displayed on both sides of the updated trace. The connection icon is an icon for extending the trace to a trace that is not shown.

In addition, the controller 140 may control the touch screen to display function icons that can perform a function of editing the menu activated on the touch screen 120 while displaying the menu information. The function icon may include various icons according to applications, such as, a selection icon to select the corresponding menu information, a switch icon to access an upper menu of the corresponding menu information, and a delete icon to delete the corresponding menu information.

In addition, the controller 140 may control the touch screen to display the menu information in various forms. For example, when the form of the dragged input signal corresponds to a drag form stored in the memory unit 110, the controller 140 may control the touch screen to arrange the menu information according to the image definition based on the corresponding drag form. The controller 140 may provide a correction function for the input signal to determine a dragged input signal generated within a reference error range as the dragged input signal corresponding to the shape of the trace set in advance, thereby displaying various pieces of the menu information according to the shape of trace set in advance. In addition, the controller 140 may control the touch screen to display the menu information on the trace of the dragged input signal at every time point when the dragged input signal of the user is released.

The controller 140 may provide various edit functions for the trace and the menu information which are already displayed. Specifically, when the dragged input signal passes a fixed point which may be arbitrarily set, the controller 140 may fix the trace and the menu information displayed on the trace to the displayed position, and the trace may be deformed or relocated according to a manipulation input signal of the user. For example, if the user touches a point of the trace and drags the trace, the shape of the trace may be changed in response to the dragged input signal of the user. The controller 140 may control the touch screen to display a form changing point for inputting a form changing signal for the trace when the trace and the menu information are fixed. The fixed point may be set to an arbitrary point on the touch screen 120 or generated such as when all of the menu information is displayed according to the selection of the user. For another example, if the user touches and drags menu information not on the trace, the position of the menu information may be moved according to the dragged input signal of the user. According to the dragged input signal of the user, the position of the menu information itself may be moved, or a new icon copied from the menu information may be moved. The copied new icons may be subsequently displayed on the display screen of the mobile terminal even if the trace and the menu information are deleted. The moved or copied menu information may be moved again to the trace in the manner described above.

The controller 140 may display the menu information into upper and lower categories classified, and may control the touch screen to display sub-menus that belong to an arbitrary main menu, and items that belong to one sub-menu among the sub-menus. When a drag signal wherein a touch starts is inputted to an arbitrary main menu, the controller 140 may control the touch screen to display the sub-menus that belong to the main menu corresponding to the point where the touch is started. When an arbitrary sub-menu is selected in various manners such as touching or direction switching while the sub-menus are displayed, items of the selected sub-menu may be displayed in a same or similar manner. That is, the controller 140 may control the touch screen to display sub-menus corresponding to a main menu and items corresponding to one sub-menu to be connected in a tree structure. Otherwise, when an arbitrary sub-menu is selected, in order to display items corresponding to the sub-menu in the subsequent operation, the controller 140 may control the touch screen to display items corresponding to the selected sub-menu while displaying a switch icon for switching the screen to a screen displaying a menu of an upper level.

In addition, the controller 140 may receive a selection signal for the menu information displayed in various manners. Specifically, the controller 140 may recognize as the selection signal, a signal inputted at the time when the user releases the drag of input signal, when the user inputs a new touch signal, when the user inputs two touches or a long touch, when a touch has stayed at an arbitrary point for a reference time or longer, when a change in direction occurs with a reference angle or greater, or the like.

When the dragged input signal of the user exceeds a reference length, the controller 140 may allow the trace and the menu information displayed in the state where they are not selected by the user to disappear in the displayed order so as to maintain an average quantity of the displayed menu information. If the dragged input signal of the user moves backward along the trace on which the menu information has disappeared, the controller 140 may control the touch screen to display again the disappeared menu information in the reverse order.

When the dragged input signal deviates from the reference area displayed on the touch screen 120, the controller 140 may scroll the screen to display the virtual area extended along the direction of the user drag of input signal on the touch screen 120 by using the virtual area of the touch screen 120. For example, if the user inputs a dragged input signal to move to an area to the right of the area displayed on the touch screen 120, the controller 140 may control the touch screen to scroll the area displayed in the mobile terminal 100 to the right to display the virtual area. If the user wants to drag the signal for further movement at the boundary of the extended virtual portion, the controller 140 may provide information indicating that there is no more extended area by executing a warning motion using a warning sound, a warning vibration, a warning message, or the like. In addition, if the user selects an item in the newly displayed extended area, the controller 140 may scroll the display screen of the mobile terminal to place the item at the center of the display screen of the mobile terminal.

The controller 140 may receive a detection signal of the motion sensing unit 132 and arrange and display the menu information displayed on the touch screen 120 on a basis set in advance.

The embodiments described herein may be implemented in a recording medium that can be read and executed by a computer or a similar device using software and hardware in various combinations.

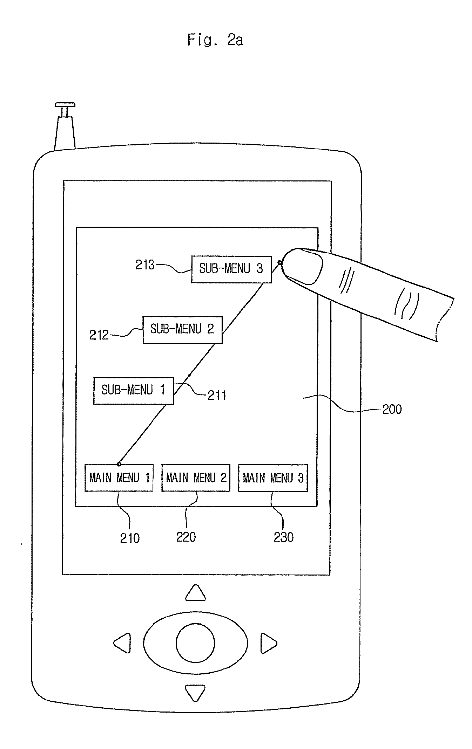

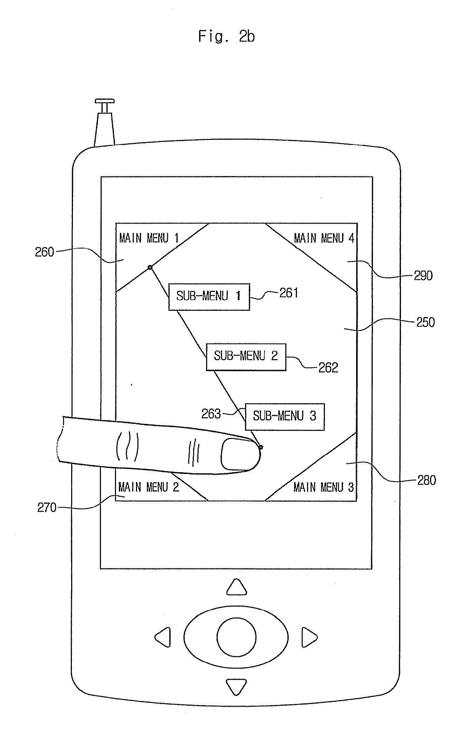

FIG. 2a and FIG. 2b are views illustrating a display screen of the mobile terminal displaying main menus and sub-menus according to an exemplary embodiment.

FIG. 2a illustrates a display screen of the mobile terminal on which sub-menus are displayed for main menus displayed in a line.

Referring to FIG. 2a, first, second, and third main menus 210, 220, and 230 and first, second, and third sub-menus 211, 212, and 213 are displayed on the display screen 200 of the mobile terminal. The first, second, and third sub-menus 211, 212, and 213 are menus that belong to the first main menu 210. If a user touches and drags the first main menu 210 along the line to execute a particular function of the first main menu 210, the first, second, and third sub-menus 211, 212, and 213 that belong to the first main menu 210 are displayed on the trace along the line.

FIG. 2b illustrates a display screen of the mobile terminal on which sub-menus are displayed for main menus displayed in the standby state of the mobile terminal. Referring to FIG. 2b, first, second, third, and fourth main menus 260, 270, 280, and 290 and first, second, and third sub-menus 261, 262, and 263 are displayed on a display screen 250 in a standby state of the mobile terminal. The icon for a main menu is an icon for directly accessing the corresponding main menu, and may be displayed on the standby screen according to the setting for the main menu more frequently used by the user. The method of displaying the main menu icon may be changed according to applications. When the user touches and drags the first main menu 260 to execute a particular function of the first main menu 260, the first, second, and third sub-menus 261, 262, and 263 that belong to the first main menu 260 are displayed on the trace.

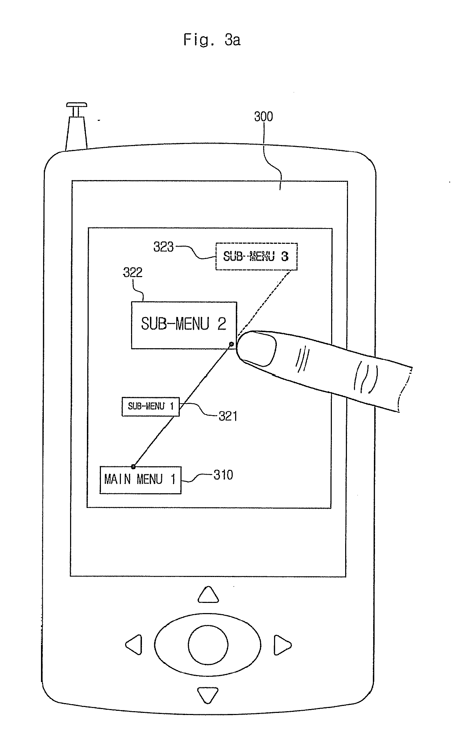

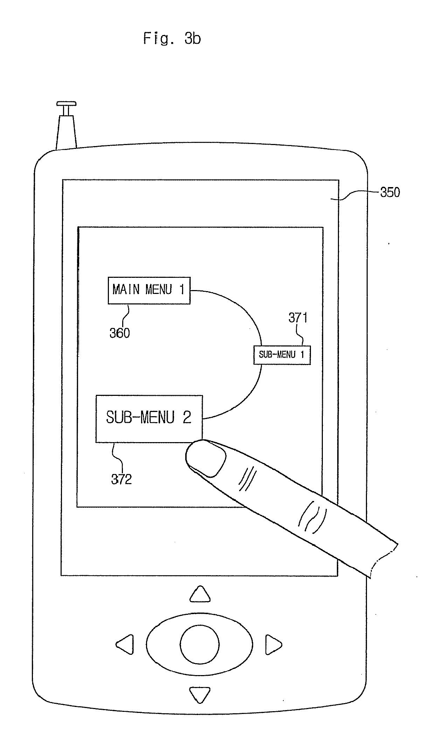

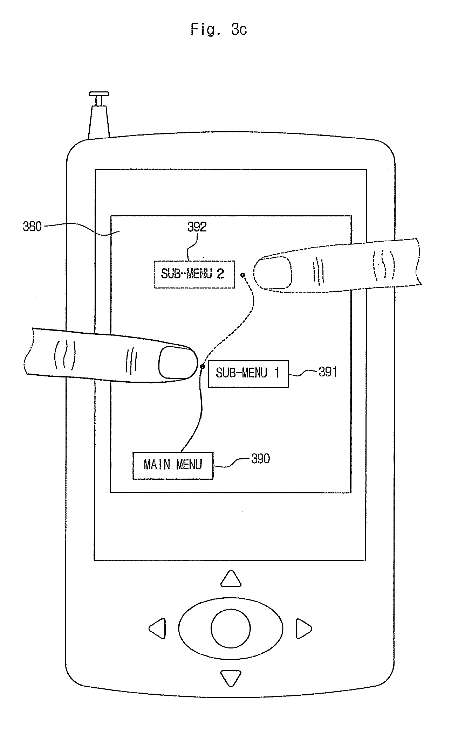

FIG. 3a, FIG. 3b, and FIG. 3c are views illustrating a display screen of the mobile terminal displaying sub-menus according to an exemplary embodiment.

FIG. 3a is a view illustrating a display screen of the mobile terminal showing a 2D animation effect to zoom in a sub-menu that is displayed.

Referring to FIG. 3a, a first main menu 310 and first and second sub-menus 321 and 322 are displayed on a display screen 300 of the mobile terminal. As the user subsequently inputs a dragged input signal, the size of the first sub-menu 321 that is already displayed is deceased, and the second sub-menu 322 corresponding to a current point is magnified and displayed. A third sub-menu 323 is not displayed on the display screen of the mobile terminal until the user's dragged input signal reaches a corresponding point, and at that point, the second sub-menu 322 is reduced and the magnified third sub-menu 323 is displayed.

FIG. 3b is a view illustrating a display screen of the mobile terminal showing a 3D animation effect to zoom in a sub-menu that is displayed. Referring to FIG. 3b, a first main menu 360 and first and second sub-menus 371 and 372 are displayed on a display screen 350 of the mobile terminal. As the user subsequently inputs a dragged input signal, the first sub-menu 371 that is already displayed moves backward and is displayed at a lower layer in a 3D manner while the size thereof is reduced, and the second sub-menu 372 corresponding to the current point of the user's drag signal is displayed at an upper layer in a 3D manner with the increased size.

Various types of animation effect based on size, color, and distance may be applied according to the applications of the mobile terminal.

FIG. 3c is a view illustrating a display screen of the mobile terminal in which a sub-menu is displayed according to a release signal of the user. Referring to FIG. 3c, a main menu 390 and a first sub-menu 391 are displayed on a display screen 380 of the mobile terminal. The first sub-menu 391 is displayed on the display screen of the mobile terminal at the time when an input signal of the user is released. Thereafter, when the user releases the input signal again while inputting the dragged input signal next to the touch trace, a second sub-menu 392 is displayed.

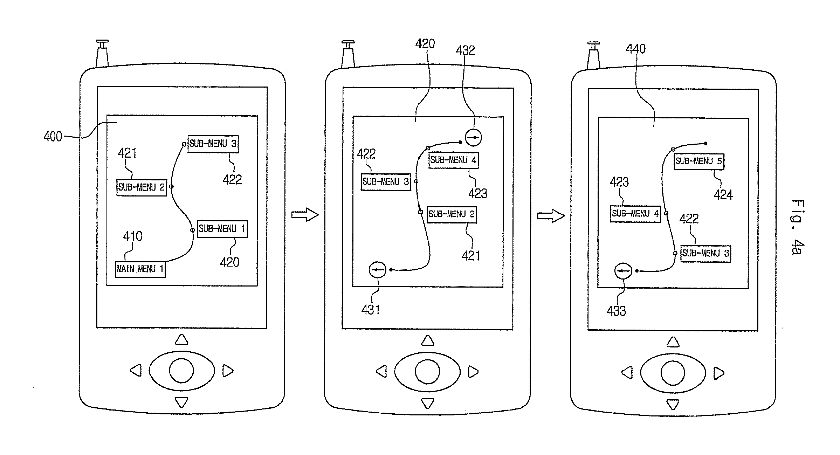

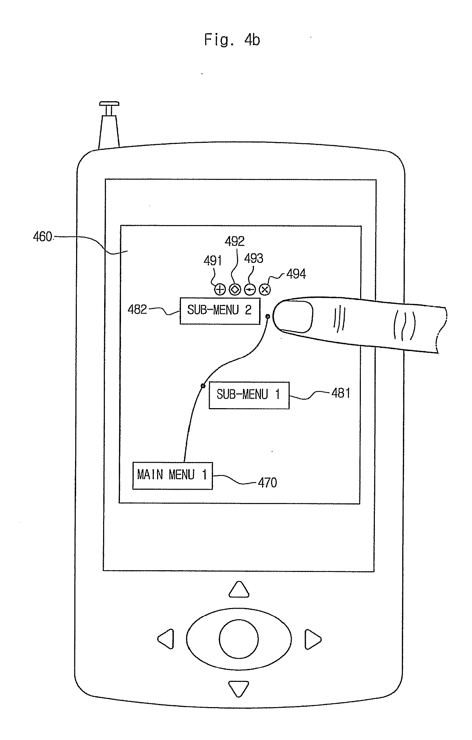

FIG. 4a and FIG. 4b are views illustrating a display screen of the mobile terminal displaying sub-menus according to an exemplary embodiment.

FIG. 4a is a view illustrating a display screen of the mobile terminal in which the sub-menus corresponding to the reference number are sequentially displayed while updating.

Referring to FIG. 4a, the reference number of sub-menus of the display screens 400, 420, and 440 that are sequentially displayed while the sub-menus are updated is three, and if more than three sub-menus are to be displayed, the sub-menus are deleted in the displayed order, and at the same time, a new sub-menu is displayed. Methods for displaying the new sub-menu include displaying the sub-menu at a new position while the trace is connected, a method for changing sub-menu contents of the sub-menu that is previously displayed, or the like. First, second, and third sub-menus 420, 421, and 422 that belong to a first main menu 410 are displayed along a dragged input signal of the user, and as the dragged input signal of the user is inputted subsequently, the first sub-menu 420 is deleted, and a new fourth sub-menu 423 is displayed. On the updated display screens 420 and 440 of the mobile terminal, connection icons 431, 432, and 433 that can be extended to the previous and the next traces may be displayed together. In the case where the user wants to display the first sub-menu again on the display screen of the mobile terminal displaying the second, third, and fourth sub-menus 421, 422, and 423, the user may touch the connection icon 431 that can be extended to the previous trace to switch to the previous trace.

FIG. 4b is a view illustrating a display screen of the mobile terminal in which function icons are displayed for the activated sub-menu. Referring to FIG. 4b, a first main menu 470, first and second sub-menus 481 and 482, and function icons 491, 492, 493, and 494 may be displayed on the display screen 460 of the mobile terminal. The function icons 491, 492, 493, and 494 are icons having functions of editing the activated sub-menu, and may include the access icon 491, the execution icon 492, the switch icon 493 to switch to the upper level, the delete icon 494, and the like. According to the dragged input signal of the user while the second sub-menu 482 is activated, the function icons 491, 492, 493, and 494 are displayed at positions corresponding to the second sub-menu 482 in order to execute functions for the second sub-menu 482.

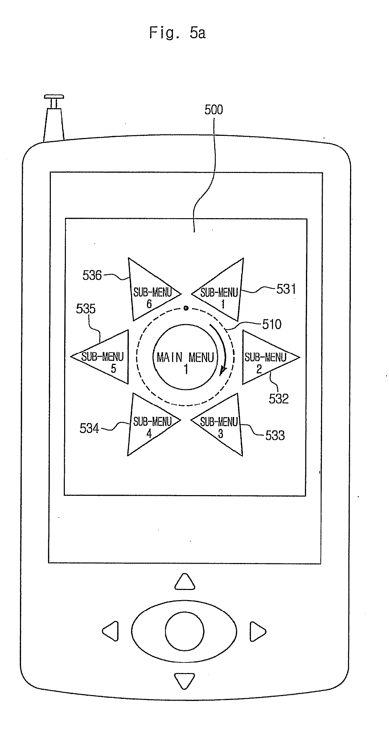

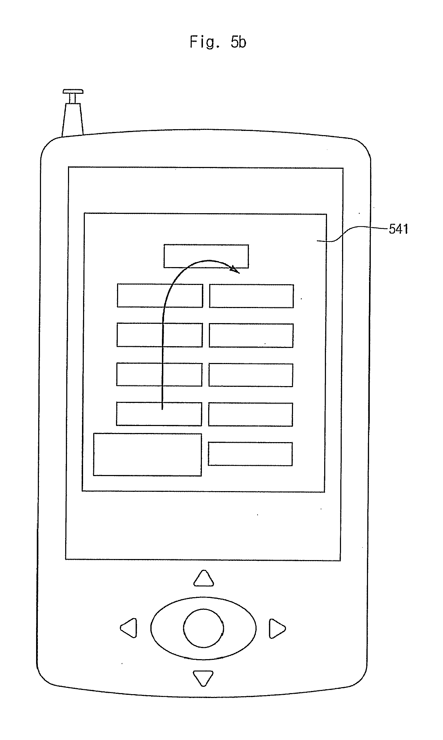

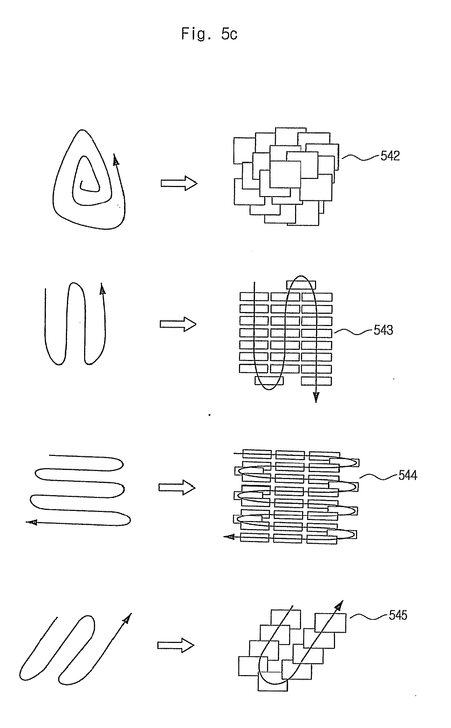

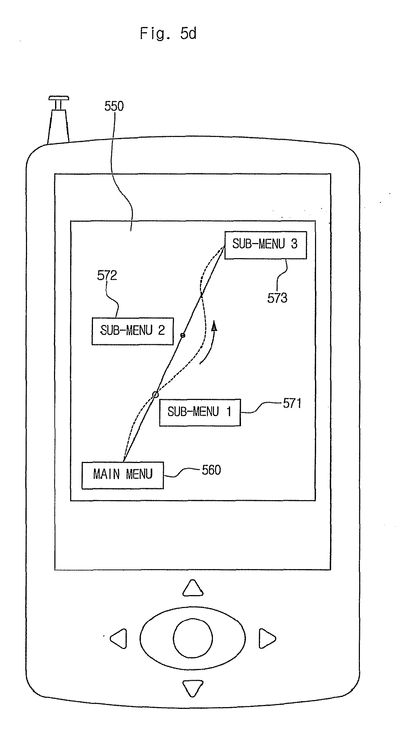

FIG. 5a, FIG. 5b, FIG. 5c, and FIG. 5d are views illustrating a display screen of the mobile terminal displaying the menu information in various manners according to an exemplary embodiment.

FIG. 5a, FIG. 5b, and FIG. 5c are views illustrating the display screen of the mobile terminal displaying various images displaying the menu information, and FIG. 5d is a view illustrating the display screen of the mobile terminal correcting and displaying the dragged input signal.

Referring to FIG. 5a, when the user inputs a dragged input signal 510 in a closed curve shape, pieces of menu information 531, 532, 533, 534, 535, and 536 are displayed according to the closed curve shape. Referring to FIG. 5b and FIG. 5c, the mobile terminal may store various images 541, 542, 543, 544, and 545 defining the menu display forms according to the drag form corresponding to an arbitrary shape, and may display the menu in various manners according to applications.

Referring to FIG. 5d, when the user inputs the dragged input signal that does not correspond identically with a predefined trace but is within an error range of the predefmed trace, the mobile terminal recognizes the dragged input signal generated in the reference error range as the dragged input signal along the trace stored in advance and displays the trace stored in advance and the menu information 560, 571, 572, and 573 according to the displayed trace. Thus, even if the user inputs the dragged input signal for a straight line with an error, a trace in a straight line form is displayed on the display screen 550 of the mobile terminal.

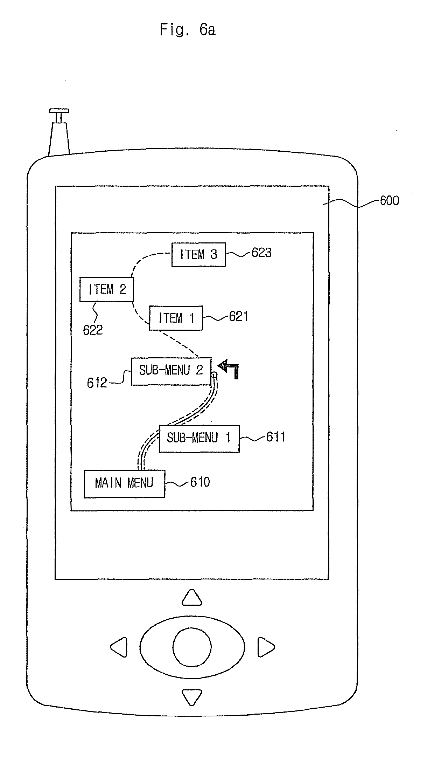

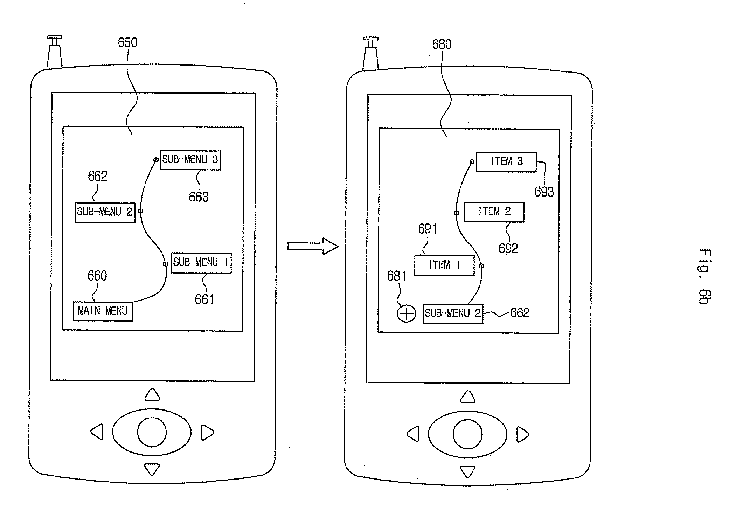

FIG. 6a and FIG. 6b are views illustrating a display screen of the mobile terminal displaying main menus, sub-menus, and items according to an exemplary embodiment.

FIG. 6a is a view illustrating a display screen of the mobile terminal displaying main menus, sub-menus, and items together in a tree structure.

Referring to FIG. 6a, on a display screen 600 of the mobile terminal, a main menu 610, first and second sub-menus 611 and 612, and first, second, and third items 621, 622, and 623 are displayed. The user may select the second sub-menu 612 by a release, a touch, a long touch, two touches, a change in direction with a reference angle or greater, and the like. After selecting the second sub-menu 612, the user may subsequently input the dragged input signal to display the items 621, 622, and 623 that belong to the second sub-menu 612 on the trace.

FIG. 6b is a view illustrating a display screen of the mobile terminal displaying main menus, sub-menus, and items together with a switch icon to switch between upper and lower levels. Referring to FIG. 6b, a tree structure of main menus and sub-menus is displayed on a first display screen 650 of the mobile terminal, and a tree structure of sub-menus and items is displayed on a second display screen 680. When the user selects an arbitrary main menu 660 and inputs a dragged input signal, first, second, and third sub-menus 661, 662, and 663 that belong to a main menu 660 are displayed on the trace. When the second sub-menu 662 is selected by a user, a switch icon 681 for switching to the upper screen displaying the relation between the main menu and the sub-menu on the display screen 680 of the mobile terminal are displayed on the display screen of the mobile terminal, and the items 691, 692, and 693 included in the second sub-menu 662 are displayed on the trace according to the dragged input signal.

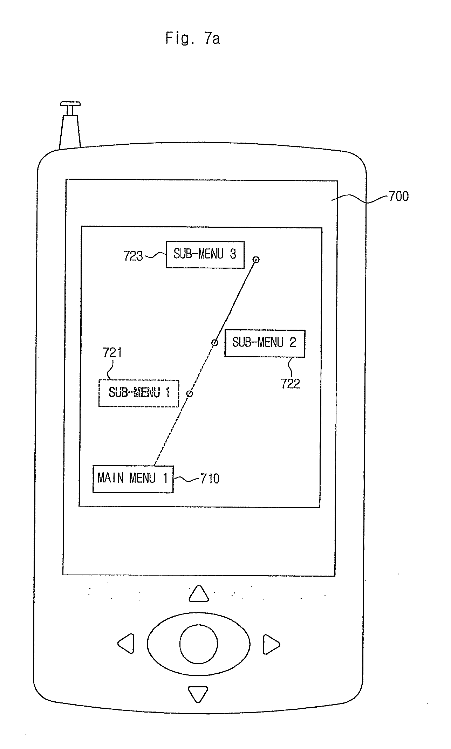

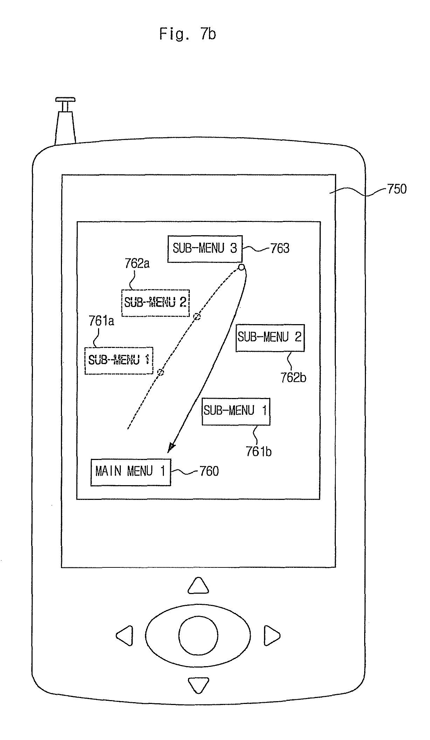

FIG. 7a and FIG. 7b are views illustrating a display screen of the mobile terminal for deleting menu information displayed according to an exemplary embodiment.

FIG. 7a is a view illustrating a display screen of the mobile terminal for deleting the menu information that is previously displayed according to the release signal.

Referring to FIG. 7a, a first main menu 710 and first, second, and third sub-menus 721, 722, and 723 are displayed on a display screen 700 of the mobile terminal according to the dragged input signal of the user, and the first sub-menu 721 previously displayed is deleted as the release signal of the user is input. A method for deleting the menu information may include a method of deleting a predetermined ratio of the trace in proportion to time.

FIG. 7b is a view illustrating a display screen of the mobile terminal for displaying the deleted menu information in the reverse order according to a reverse drag of input signal of the user. Referring to FIG. 7b, the first and second sub-menus 761 a and 762a for a first main menu 760 are deleted and only a third sub-menu 763 is displayed according to the release signal of the user. Then, when a dragged input signal that moves in the opposite direction to the previous dragged input signal is input, the deleted first and second sub-menus 761b and 762b are displayed again in reverse order as second sub-menu 762b and first sub-menu 761b. A method for displaying again the menu information may include a method for subsequently displaying sub-menus corresponding to a point that the dragged input signal passes, and consequently, the menu information may be displayed again on the trace in the order opposite to the deleted order.

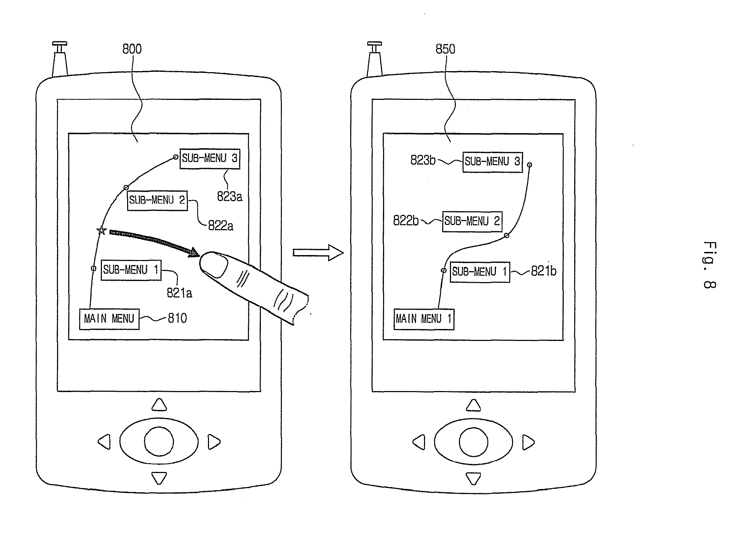

FIG. 8 is a view illustrating a display screen of the mobile terminal for providing an edit function for a displayed trace according to an exemplary embodiment.

Referring to FIG. 8, a first main menu 810 and first, second, and third sub-menus 821a, 822a, and 823 a are displayed on a first display screen 800 of the mobile terminal according to a dragged input signal of the user. The trace and the menu information may be fixed when the dragged input signal of the user passes through a fixed point or by another manipulation input signal. When the trace and the menu information are fixed, a shape changing point (such as the star represented on first display screen 800) for changing the trace may be displayed. When the user drags a portion of the trace to another point while pieces of the menu information are fixed to the touch trace, as illustrated by a second display screen 850 of the mobile terminal, the shape of the trace is changed according to the dragged input signal, and menu information 821b, 822b, and 823b respectively corresponding to first, second, and third sub-menus 821a, 822a, and 823 a are displayed on the changed trace shape.

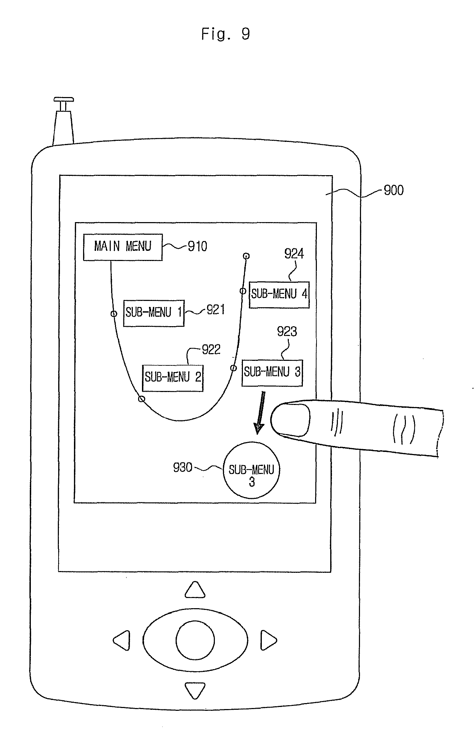

FIG. 9 is a view illustrating a display screen of the mobile terminal for providing an edit function for the displayed menu information according to an exemplary embodiment.

Referring to FIG. 9, a main menu 910 and first, second, third, and fourth sub-menus 921, 922, 923, and 924 are displayed on a display screen 900 of the mobile terminal according to a dragged input signal of the user. The touch trace and the menu information may be fixed when the dragged input signal of the user passes through a fixed point or by another manipulation input signal. In the state where the menu information is fixed to the touch trace, when the user drags menu information, such as the third sub-menu 923, to another point, an access icon 930 for an access to the third sub-menu 923 is displayed on the display screen of the mobile terminal. Specifically, the menu information dragged by the user is copied to be displayed on the display screen 900 of the mobile terminal in an icon form, and the access icon 930 that is displayed additionally may be subsequently displayed although the trace and the menu information are deleted. An arbitrary piece of menu information selected as described above may be copied to be used for forming a new access icon or used for changing the position of the displayed menu information.

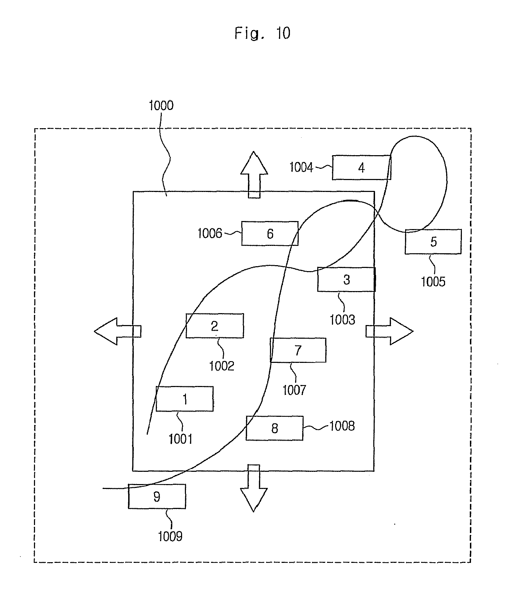

FIG. 10 is a view illustrating a display screen of the mobile terminal including a virtual area according to an exemplary embodiment.

Referring to FIG. 10, a display screen 1000 of the mobile terminal further includes an extended virtual area that can be displayed by scrolling in addition to a reference area actually displayed on the mobile terminal. The menu information exists over the entire extended virtual area, and when the user inputs a dragged input signal in a desired direction to display menu information (for example, 1004, 1005, and 1009) that is not displayed on the reference area, the display screen of the mobile terminal is scrolled in the direction in which the dragged input signal is input and extended to an area in the corresponding direction.

The configurations and methods of the above-mentioned embodiments are not limitedly applied to the mobile terminal, but the entirety or a combination of parts of the embodiments may be selectively employed to achieve various modifications of the embodiments.

While the exemplary embodiments have been shown and described, it will be understood by those skilled in the art that various changes in form and details may be made thereto without departing from the spirit and scope of this disclosure as defmed by the appended claims and their equivalents.

In addition, many modifications can be made to adapt a particular situation or material to the teachings of this disclosure without departing from the scope thereof. Therefore, it is intended that this disclosure not be limited to the particular exemplary embodiments disclosed as the best mode contemplated for carrying out this disclosure, but that this disclosure will include all embodiments falling within the scope of the appended claims and their equivalents.
A mobile terminal that displays menu information along a trace may include a memory unit to store menu information; a touch screen including a touch panel, the touch screen to display the menu information; and a controller to control the touch screen to display at least a portion of the menu information on a trace according to a dragged input signal corresponding to the trace. A method for displaying menu information on a display includes storing menu information including a menu item and sub-menu items corresponding to the menu item, receiving a dragged input signal on the display, the dragged input signal beginning at a start point, and displaying the sub-menu items on a trace corresponding to the dragged input signal, the menu item arranged at the start point.

## Claims

1. A mobile terminal, comprising:
a memory unit to store menu information;
a touch screen comprising a touch panel, the touch screen to display the menu information; and
a controller to control the touch screen to display at least a portion of the menu information on a trace according to a dragged input signal corresponding to the trace.

2. The mobile terminal according to claim 1,
wherein the menu information comprises main menus and sub-menus, and
the controller controls the touch screen to sequentially display, on the trace, one or more sub-menus corresponding to a main menu displayed at a point from which the dragged input signal begins.

3. The mobile terminal according to claim 1,
wherein the memory unit stores information on a frequency of use of menu information used by the user, and
the controller controls the touch screen to display the portion of the menu information in an order of the frequency of use according to the information on the frequency of use.

4. The mobile terminal according to claim 1,
wherein the memory unit stores an order of priority of the menu information according to a setting of the user, and
the controller controls the touch screen to display the portion of the menu information in the order of priority according to the information on the order of priority of the user.

5. The mobile terminal according to claim 1,
wherein the memory unit stores a preference folder comprising the menu information according to a setting of the user, and
the controller controls the touch screen to display on the trace the portion of the menu information corresponding to the preference folder according to the dragged input signal.

6. The mobile terminal according to claim 1, wherein the controller controls the touch screen to display the portion of the menu information with an animation effect.

7. The mobile terminal according to claim 2, wherein the controller controls the touch screen to sequentially display pieces of the menu information corresponding to a reference number of display according to the dragged input signal on the trace.

8. The mobile terminal according to claim 7, wherein the controller controls the touch screen to display connection icons for extending the trace on ends of the trace.

9. The mobile terminal according to claim 1, wherein the controller controls the touch screen to display function icons to edit activated menu information from among the portion of the menu information displayed on the touch screen.

10. The mobile terminal according to claim 1,
wherein the memory unit stores images that define types of menu display according to a drag form corresponding to a shape, and
the controller controls the touch screen to display the portion of the menu information according to an image based on the drag shape if the dragged input signal corresponds to a drag form stored in the memory unit.

11. The mobile terminal according to claim 1, wherein the controller controls the touch screen to display the menu information on the trace when the dragged input signal is released.

12. The mobile terminal according to claim 1, wherein the controller controls the portion of the menu information to disappear from the touch screen in a displayed order when the user's input signal is released.

13. The mobile terminal according to claim 12,
wherein the memory unit stores the trace and the disappeared portion of the menu information, and
the controller controls the touch screen to display the disappeared portion of the menu information in a reverse order if the dragged input signal moves in reverse along the trace.

14. The mobile terminal according to claim 1, wherein the controller executes a menu at a point where the dragged input signal is released, a point where a touch signal is input, or a point where the touch signal is stopped for at least a reference time.

15. The mobile terminal according to claim 1,
wherein the touch screen further comprises an extended virtual area, and
if the dragged input signal extends beyond a reference area displayed on the touch screen, the controller scrolls a display screen to display the extended virtual area on the touch screen in a direction of the dragged input signal.

16. The mobile terminal according to claim 1,
further comprising a proximity sensing unit to sense an object near the touch screen and to generate a proximity detection signal,
wherein the controller controls the touch screen to display the portion of the menu information stored in the memory unit on the touch screen according to the proximity detection signal on the trace.

17. The mobile terminal according to claim 1,
further comprising a motion sensing unit to detect a motion of the mobile terminal and to generate a motion detection signal,
wherein the controller controls the touch screen to arrange the portion of the menu information displayed on the touch screen on a basis set in advance according to the motion detection signal.

18. A method for displaying menu information on a display, comprising:
storing menu information comprising a menu item and a plurality of sub-menu items corresponding to the menu item;
receiving a dragged input signal on the display, the dragged input signal beginning at a start point; and
displaying the sub-menu items on a trace corresponding to the dragged input signal, the menu item arranged at the start point.
